(19) Europäisches Patentamt
European Patent Office
Office européen des brevets

(11) **EP 2 376 977 B1**

(12) **FASCICULE DE BREVET EUROPEEN**

(45) Date de publication et mention de la délivrance du brevet:
**15.02.2017 Bulletin 2017/07**

(21) Numéro de dépôt: **09756300.1**

(22) Date de dépôt: **16.11.2009**

(51) Int Cl.:
*G02F 1/133* (2006.01)   *G02F 1/141* (2006.01)
*G09G 3/36* (2006.01)   *G02B 27/22* (2006.01)
*G02C 7/10* (2006.01)

(86) Numéro de dépôt international:
**PCT/EP2009/065257**

(87) Numéro de publication internationale:
**WO 2010/081573 (22.07.2010 Gazette 2010/29)**

(54) **DISPOSITIF D'OBTURATION OPTIQUE À BASE DE CRISTAUX LIQUIDES AVEC ATTÉNUATION DES BRUITS DE COMMUTATION DESDITS CRISTAUX LIQUIDES, LUNETTE DE VISUALISATION ET DISPOSITIF D'AFFICHAGE CORRESPONDANTS.**

OPTISCHE BLENDENANORDNUNG AUF DER BASIS VON FLÜSSIGKRISTALLEN MIT DÄMPFUNG DES SCHALTRAUSCHENS DER FLÜSSIGKRISTALLE, ENTSPRECHENDE BETRACHTUNGSBRILLEN UND ANZEIGEANORDNUNG

OPTICAL SHUTTERING DEVICE BASED ON LIQUID CRYSTALS WITH ATTENUATION OF THE SWITCHING NOISE OF SAID LIQUID CRYSTALS, CORRESPONDING VIEWING GOGGLES AND DISPLAY DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **13.01.2009 FR 0950153**

(43) Date de publication de la demande:
**19.10.2011 Bulletin 2011/42**

(73) Titulaire: **Institut Télécom - Télécom Bretagne 29238 Brest Cedex 3 (FR)**

(72) Inventeurs:
• **DE BOUGRENET DE LA TOCNAYE, Jean-Louis**
  **F-29820 Guilers Kerhuo (FR)**
• **CAILLAUD, Bertrand**
  **F-06700 Laurent du Var (FR)**
• **DANIEL, Emmanuel**
  **F-29480 Le Relecq Kerhuon (FR)**
• **BELLINI, Robert**
  **F-75003 Paris (FR)**
• **CASTANY, Olivier**
  **F-29280 Plouzane (FR)**

(74) Mandataire: **Vidon Brevets & Stratégie**
  **16B, rue de Jouanet**
  **B.P. 90333**
  **Technopole Atalante**
  **35703 Rennes Cedex 7 (FR)**

(56) Documents cités:
**EP-A- 0 617 312**   **EP-A- 1 241 514**
**EP-A- 1 798 710**   **FR-A- 2 914 755**
**JP-A- 2000 284 224**

**Description**

## 1. DOMAINE DE L'INVENTION

Le domaine de l'invention est celui des dispositifs d'obturation optique mettant en oeuvre des matériaux à base de cristaux liquides.

Plus précisément, l'invention concerne une technique permettant de limiter les bruits audibles lors de la commutation desdits cristaux liquides.

L'invention trouve tout particulièrement, mais non exclusivement, son application pour la réalisation d'une lunette de visualisation alternée à base de cristaux liquides; sa caractéristique principale est de réduire les bruits de commutation des cristaux liquides.

L'invention trouve également son application pour des écrans d'affichage (visualisation), par exemple dans le domaine de la téléphonie mobile.

## 2. PROBLEMATIQUE ET ARRIÈRE-PLAN TECHNOLOGIQUE

Dans toute la suite de la description, on se place dans le cas de lunettes actives pour la visualisation de contenus numériques en relief (trois dimensions 3-D).

Une telle lunette comprend classiquement un obturateur à base d'au moins une cellule à base de cristaux liquides.

Plus précisément, les obturateurs équipant ce type de lunettes sont constitués d'au moins une cellule formée de deux substrats placés l'un en regard de l'autre et renferment un cristal liquide. De tels substrats sont conçus en majorité dans un matériau rigide et transparent tel que le verre.

Pour réaliser un obturateur à la fois léger et à faible encombrement, il est d'usage d'utiliser des cellules à base de cristaux liquides qui sont légères et peu encombrantes. Pour réduire le poids de ce type de cellule, il est classique de réduire l'épaisseur des substrats en verre en utilisant des substrats en verre de faible épaisseur, plus connus sous le nom de « substrats en verre mince » dont l'épaisseur est classiquement comprise entre 0,5 et 1 mm.

Une telle lunette est notamment décrite dans le document de brevet US6943852. Cette lunette se compose d'une cellule unique formée par un premier et un second substrat situés en regard l'un de l'autre. L'espace entre les deux substrats forme une cavité accueillant un cristal liquide de type nématique.

Pour rappel, les matériaux à base de cristal liquide sont des matériaux dont on peut modifier les propriétés optiques et notamment la biréfringence en leur appliquant un champ électrique $E$ créé par application d'une tension de commande V entre les deux substrats au moyen d'électrodes minces transparentes. Lorsque le cristal liquide est placé, par exemple, entre polariseur et analyseur croisés, on obtient alors un obturateur optique commandé en tension. Un tel obturateur optique à base de cristal liquide observe alors au moins deux états suivant l'application ou non d'une tension aux bornes des deux substrats :

- un état dit passant, dans lequel il laisse passer la lumière et,
- un état bloquant, dans lequel il ne laisse pas passer la lumière ou ne laisse passer qu'une faible partie de celle-ci.

L'exigence de la qualité du rendu des mouvements en vision relief 3-D a conduit, par exemple, à développer des techniques de projection à triple flash cadencé à 144 Hz au lieu d'une technologie à double flash cadencé à 96 Hz (c'est-à-dire une image alternativement sur chaque oeil à une cadence non perceptible par l'oeil) pour un cycle d'échantillonnage standard du cinéma à 48 Hz.

De telles techniques imposent donc une technologie d'obturateurs oculaires rapides et d'une qualité optique compatible avec la qualité d'une projection en salle imposée par les studios hollywoodiens.

Cependant, les cristaux liquides nématiques classiquement utilisés ne permettent pas d'obtenir un temps de réponse assez court pour le passage de l'état bloquant à l'état passant dit transparent (autrement appelé temps d'ouverture). En effet, cette technologie est limitée à des temps d'ouverture de l'ordre de quelques millisecondes. La technologie nématique est dans ce cas compatible uniquement avec le régime de projection à double flash cadencé à 96 Hz et non pas avec le régime à triple flash cadencé à 144 Hz.

Une autre technologie pour réaliser les obturateurs dynamiques est fondée sur l'utilisation de cristaux liquides smectiques. Cette technologie smectique permet d'obtenir :

- un temps de réponse court pour le passage de l'état transparent à l'état bloquant de l'ordre de 100 μs à quelques centaines de μs ;
- un temps de réponse court pour le passage de l'état bloquant à l'état transparent de l'ordre de 100 μs à quelques centaines de μs.

On notera la symétrie de commutation vers les états bloquant et transparent. Par exemple, les cristaux liquides smectiques ferroélectriques (ou « FLC » pour « Ferroelectric Liquid Crystal ») ou bien les cristaux liquides smectiques antiferroélectrique (ou « AFLC » pour « Anti-Ferroelectric Liquid Crystal ») sont ainsi plus rapides que les cristaux liquides nématiques.

L'utilisation de cristaux liquides plus rapides lors du passage de la technologie nématique à la technologie smectique ainsi que l'augmentation des fréquences de battement (passage de 48 images par seconde à 144 images par secondes) implique des tensions de commande du cristal liquide plus élevées pour des temps de montée plus courts. Il faut savoir que les épaisseurs de cristal liquide sont également plus faibles : de 1-2 $\mu$m pour les FLC, par rapport à 5-10$\mu$m pour les différents nématiques. Il en résulte que les champs appliqués sont plus élevés (10V/$\mu$m pour les cristaux liquides smectiques à quelques V/$\mu$m pour les cristaux liquides nématiques). Un exemple de contrôle d'un obturateur optique utilisant un schéma électrique en parallèle est décrit dans le document EP1798710.

Ainsi, l'augmentation des fréquences de battement et des champs électriques appliqués au cristal liquide, s'accompagne d'une source de bruit s'avérant gênante pour l'utilisateur. En effet, compte tenu de la proximité de la lunette de visualisation (dans cet exemple particulier) et de l'appareil auditif de l'utilisateur, les bruits de commutation des cellules à cristaux liquides deviennent gênants dès lors que la cellule à cristaux liquides se trouve à proximité de l'appareil auditif.

Plus précisément, que ce soit en technologie nématique ou smectique, le bruit est principalement causé par la vibration des substrats de verre lorsque, pour faire commuter le cristal liquide, des tensions électriques alternativement positives et négatives (en forme de créneau) sont appliquées aux substrats de verre constituant une cellule obturatrice (dans le cas d'une lunette de visualisation) ou aux substrats de verre de l'afficheur (par exemple un écran de téléphone portable).

En effet, sous une tension de commande V, la force électrostatique résultante exercée sur les substrats de verre, à une fréquence située dans la gamme audio fait vibrer les substrats dont il résulte une vibration acoustique dans le spectre audible.

On montre que l'amplitude des vibrations induites par cette force électrostatique est d'autant plus importante que le substrat en verre est mince.

Or, ce problème de génération de bruit est d'autant plus accentué que les dispositifs d'obturation optique doivent être intégrés dans des équipements, par exemple une lunette de visualisation ou un écran d'un dispositif d'affichage, les plus légers possibles, exigeant des verres de plus en plus minces.

En d'autres termes, la réduction du poids des équipements recherchée par les fabricants de ces dispositifs, est limitée par cette génération de bruit issue de vibrations (ou ondes) acoustiques se propageant d'autant plus facilement que l'épaisseur des substrats en verre est faible. Ce problème est accentué avec l'usage de cristaux liquides smectiques du fait de champs électriques significativement plus élevés qu'avec les cristaux nématiques.

## 3. OBJECTIFS DE L'INVENTION

Dans au moins un mode de réalisation de l'invention, un objectif est de fournir une technique permettant de réduire de manière efficace les vibrations acoustiques engendrées par la force électrostatique générée lors de la commutation des cristaux liquides, tout en optimisant le poids de la cellule constituée des deux substrats et du cristal liquide, et a fortiori de réduire le poids du dispositif d'obturation optique, selon un mode de réalisation particulier de l'invention.

Au moins un mode de réalisation de l'invention a également pour objectif de fournir une telle technique simple à mettre en oeuvre et peu coûteuse.

## 4. EXPOSÉ DE L'INVENTION

Dans un mode de réalisation particulier de l'invention, il est proposé un dispositif d'obturation optique selon la revendication 1.

Selon ce mode de réalisation, l'invention est remarquable en ce que le circuit électronique de commutation comprend en outre une source de courant montée en série entre le module d'alimentation et l'organe de commutation.

Ainsi, ce mode de réalisation repose sur une approche tout à fait nouvelle et inventive consistant à atténuer, par un contrôle des formes d'impulsion de la tension de commande des cristaux liquides de la cellule, le bruit occasionné par la vibration des substrats en verre lors de la commutation du cristal liquide. En particulier, l'utilisation d'une source de courant montée en série selon l'invention permet de modifier le temps de montée (la pente) de l'impulsion électrique appliquée à la cellule.

Grâce à cette correction électronique, il est alors possible d'utiliser des substrats de plus faible épaisseur, optimisant ainsi le poids de la cellule optique et a fortiori celui du dispositif d'obturation optique.

De façon avantageuse, les premier et second substrats ont des épaisseurs respectives différentes et telles que :

- une épaisseur totale cumulée desdits premier et second substrats est inférieure ou égale à 2,50 mm ; et
- le substrat le plus épais parmi lesdits premier et second substrats est en verre et possède une épaisseur supérieure ou égale à 0,70 mm.

Ainsi, selon cette configuration, il est possible d'utiliser au moins un substrat de faible épaisseur dans le but de limiter le poids de la cellule optique. En effet, l'absorption des vibrations induites par le cristal liquide est d'autant plus efficace que le substrat en verre est épais. Selon cette configuration, les vibrations des substrats induites par le champ électrique sont amorties par le substrat le plus épais.

Egalement, l'utilisation de substrats en verre d'une épaisseur supérieure ou égale à 0,70 mm permet de rigidifier suffisamment la cellule, et par conséquent de limiter la flexion vibratoire des premier et second substrats. Ceci a pour effet avantageux de réduire le niveau de bruit acoustique au niveau de la cellule, tout en limitant le poids de la cellule et en augmentant sa robustesse.

Avantageusement, le substrat le moins épais est en verre et possède une épaisseur inférieure ou égale à 1 mm.

Ainsi, il est possible de réduire le poids de la cellule tout en limitant les vibrations induites par le champ électrique.

Egalement, le substrat le moins épais est en matière plastique et possède une épaisseur inférieure ou égale à 0,5 mm.

Ainsi, le poids de la cellule est optimisé.

Selon un mode de mise en oeuvre avantageux de l'invention, le matériau cristal liquide comprend une association d'au moins un cristal liquide et d'un polymère, formant ainsi un gel cristal liquide stabilisé par ledit polymère.

Ainsi, il est possible d'ajuster la pente des temps de commutation du cristal liquide, de manière à limiter le bruit d'origine percussionel. En effet, la présence de polymère s'accompagne d'une augmentation du temps de commutation du fait de la résistance de la chaîne polymère aux mouvements des molécules de cristal liquide. Ce mécanisme a pour effet de réduire le bruit acoustique en limitant l'impact de la percussion électrique sur le mouvement de rotation du directeur des molécules.

Selon une autre caractéristique avantageuse de l'invention, le matériau cristal liquide comprend une association d'au moins un cristal liquide smectique ferroélectrique FLC ou anti-ferroélectrique AFLC et d'un polymère, formant ainsi un gel cristal liquide stabilisé par ledit polymère et plus connu sous le nom respectivement de PSFLC ou PSAFLC.

Ainsi, il est possible d'ajuster la pente des temps de commutation du cristal liquide et de limiter le bruit d'origine percussionel provenant de la commutation du cristal liquide smectique.

Selon une caractéristique avantageuse de l'invention, ladite association d'au moins un cristal liquide et d'un polymère est telle que la concentration en masse volumique de polymère est comprise entre 10 et 15 %.

Ainsi, il est possible d'augmenter les temps de commutation du cristal liquide du fait notamment de la résistance de la chaîne polymère aux mouvements des molécules sans affecter la qualité optique du matériau et en évitant la diffusion optique résultant de plus fortes concentrations en polymère.

Suivant une autre caractéristique importante de la présente invention, le dispositif comprend en outre au moins une couche transparente de matière viscoélastique.

L'utilisation d'une couche de matière viscoélastique permet d'absorber l'énergie acoustique et/ou mécanique et ainsi de réduire encore le niveau de bruit acoustique généré au niveau de l'obturateur.

Dans un autre mode de réalisation, l'invention concerne une lunette de visualisation mettant en oeuvre le dispositif d'obturation optique précité.

Dans un autre mode de réalisation, l'invention concerne un dispositif d'affichage optique mettant en oeuvre le dispositif d'obturation optique précité.

## 5. **LISTE DES FIGURES**

D'autres objets, caractéristiques et avantages de l'invention apparaîtront à la lecture de la description qui va suivre à titre d'exemple non limitatif, et à l'examen des dessins annexés dans lesquels :

- la figure 1a est une vue schématique d'une lunette classique de visualisation en trois dimensions ;
- la figure 1b est une vue schématique d'un obturateur classique équipant une lunette de visualisation ;
- la figure 2 est une vue schématique des différents éléments formant un obturateur de la lunette de visualisation à base de cristal liquide de la figure 1a ;
- la figure 3 illustre schématiquement des diagrammes temporels d'un signal de synchronisation et de la tension de commande associée pour la mise sous tension d'une cellule à base de cristal liquide de la figure 2 ;
- la figure 4 illustre schématiquement l'évolution du bruit acoustique en fonction des épaisseurs e1 et e2 respectivement des premier et second substrats, dans le cas où ces derniers sont en verre et où l'épaisseur e1 est supérieure à l'épaisseur e2, selon un mode de réalisation de l'invention;
- la figure 5 illustre schématiquement un circuit électronique classique de commutation d'une cellule à base de cristal liquide ;

- les figures 6a à 6d illustrent schématiquement l'évolution de la tension et du courant circulant aux bornes de la cellule en réponse à une tension de commande, ainsi que sa réponse optique et sa réponse acoustique lorsqu'elle est alimentée sous le circuit électronique de la figure 5 ;
- la figure 7 illustre schématiquement un circuit électronique de commutation d'une cellule à base de cristal liquide selon un mode de réalisation de l'invention ;
- les figures 8a à 8d illustrent schématiquement l'évolution de la tension et du courant circulant aux bornes de la cellule en réponse à une tension de commande, ainsi que sa réponse optique et sa réponse acoustique lorsqu'elle est alimentée sous le circuit électronique de la figure 7.

## 6. DESCRIPTION DÉTAILLÉE

On s'attache plus particulièrement dans la suite de ce document à décrire la problématique existante dans le domaine des lunettes de visualisation de contenus vidéo numériques en relief trois dimensions (3-D), à laquelle ont été confrontés les inventeurs. L'invention ne se limite bien sûr pas à ce domaine particulier d'application, mais peut également être mise en oeuvre dans de nombreux autres domaines, et par exemple dans le domaine de l'affichage (visualisation) pour la téléphonie mobile, et plus généralement dans tous les cas où les objectifs listés par la suite sont intéressants.

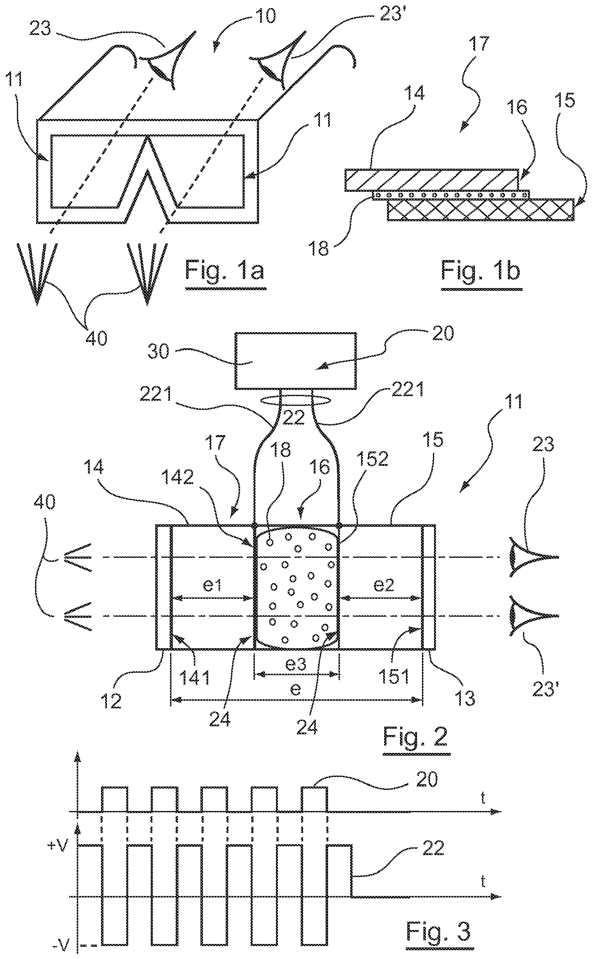

La **figure 1a** illustre schématiquement une lunette 10 classique de visualisation en trois dimensions de contenus vidéo numérique 40 en provenance d'un projecteur (non représenté).

Classiquement, suivant chaque axe de visualisation d'un oeil droit 23 et d'un oeil gauche 23' d'un utilisateur, la lunette 10 de visualisation comporte un obturateur optique 11 composé notamment d'une cellule 17 formée d'un premier substrat 14 et d'un second substrat 15 (figure 2). Ce dispositif est plus amplement décrit en relation avec la figure 2.

Cet obturateur 11 se compose classiquement d'autres éléments non représentés sur cette figure 1a par souci de simplification, comme par exemple une coque de protection de la cellule 17.

La **figure 1b** illustre schématiquement une cellule 17 d'un obturateur 11, par exemple une cellule 17 d'un obturateur gauche de la lunette 10 classique de visualisation de la figure 1a. Cette cellule 17 se compose d'un premier substrat 14 et d'un second substrat 15 placés en regard l'un de l'autre avec un léger décalage. Un cristal liquide 18 est placé ensuite dans un espace 16 (plus amplement décrit par la suite) pour constituer l'obturateur 11 à cristal liquide.

Comme illustré sur la **figure 2**, le dispositif d'obturation optique comprend plusieurs éléments nécessaires à sa mise en oeuvre.

Ainsi, ce dispositif d'obturation optique se compose d'une cellule 17 formée d'un premier substrat 14 et d'un second substrat 15 placés en regard l'un de l'autre, chaque substrat étant constitué dans un matériau transparent (par exemple en verre).

Classiquement, lors de l'assemblage des premier et second substrats (14, 15) d'épaisseur respectives (e1, e2), des espaceurs (non représentés) permettent de créer un espace 16 d'épaisseur e3 entre ces deux substrats une fois assemblés. Le cristal liquide 18 est injecté dans l'espace 16 pour ainsi former une couche de cristal liquide 18 d'épaisseur e3 très inférieure aux épaisseurs e1 et e2 des premier et second substrats. La cellule optique 17 à base de cristal liquide 18 est ainsi réalisée.

Tel que déjà indiqué, les obturateurs rapides utilisent de nos jours des cristaux liquides rapides de type smectique ferroélectrique (ou FLC pour « Ferroelectric Liquid Crystal » en anglais) qui possèdent un temps de réponse court pour le passage de l'état passant dit transparent à l'état bloquant de l'ordre de 100 µs et symétriquement un temps d'ouverture court de l'ordre de 100 µs pour le passage de l'état bloquant à l'état transparent.

Pour réaliser un obturateur rapide à base de cristal liquide, on utilise donc classiquement ce type de cristal liquide 18.

Les premier et second substrats (14, 15) comportent chacun respectivement une face externe (141, 151) et une face interne (142, 152).

Chaque face interne (142, 152) comporte en outre un dépôt d'électrodes conductrices transparentes 24.

Pour réaliser la mise sous tension du cristal liquide 18 contenu dans l'espace 16, ces électrodes 24 sont reliées par deux liaisons filaires électriques 221 à un circuit électronique de commutation 30 de la cellule 17.

Les premier et second substrats (14, 15) sont donc reliés électriquement au circuit électronique de commutation 30. Ce circuit électronique de commutation 30 est plus amplement décrit dans la suite de la description.

Le circuit électronique de commutation 30 permet de délivrer une tension de commande alternative 22 aux deux substrats (14, 15) de la cellule 17. Cette tension de commande 22 permet ainsi de faire commuter le cristal liquide 18. Dans le cas d'un cristal liquide smectique, cette tension de commande est en forme de créneau symétrique entre une tension positive +V et la tension -V (comme détaillée ci-après en relation avec la figure 3).

Classiquement, la tension de commande 22 est cadencée par un signal de synchronisation 20. Ce signal peut être émis, par exemple, par le projecteur (non représenté) émettant le contenu vidéo numérique 40. Il peut également provenir d'un module de synchronisation interne à la lunette et se situant, par exemple, dans une branche de la lunette.

Afin de polariser la lumière entrante et sortante en provenance du projecteur, les premier et second substrats (14, 15) de la cellule 17 comprennent respectivement sur leur face externe (141, 151) un premier et un second polariseur (12, 13).

Dans l'exemple de la figure 2, pour réduire les coûts de fabrication, la cellule 17 du dispositif d'obturation optique est unique. Bien évidemment, la présente invention s'applique aussi bien à ce type de cellule unique qu'à deux cellules indépendantes placées chacune en regard d'un axe de visualisation de l'utilisateur (tel qu'illustré sur la figure 1a) et également synchronisées par le même signal de synchronisation 20.

En pratique, la présente invention propose d'utiliser un cristal liquide 18 de type smectique ferroélectrique stabilisé par une chaîne polymérique, formant ainsi un gel polymère. Un tel cristal liquide est plus connu sous le nom de gel PSFLC. Ce choix permet de garantir une très bonne résistance du cristal liquide 18 aux chocs ainsi qu'une qualité optique sur toute la surface de la cellule 17 favorisant ainsi la réalisation d'une cellule 17 unique. L'utilisation d'un tel cristal liquide est déjà connue d'un document de brevet du même auteur que la présente invention (numéro de dépôt FR0702441). L'utilisation de différents cristaux liquides est plus amplement décrite par la suite.

La **figure 3** présente un exemple de diagramme du signal de synchronisation 20 et, en réponse à ce signal de synchronisation, un diagramme de la tension de commande 22 du cristal liquide 18 contenu dans la cellule 17.

Le signal de synchronisation 20 est typiquement un signal créneau alternatif cadencé à une fréquence compatible avec les techniques de projection en 3D bien connues, par exemple du type double flashs (cadence de 96 Hz).

La mise sous tension de la cellule 17 est, par exemple, activée par chacun des fronts montant et descendant du signal de synchronisation 20. Par exemple, le cristal liquide 18 est alimenté sous une tension de commande 22 de - V volts à chaque front montant du signal de synchronisation 20 et sous une tension de commande 22 de + V volts à chaque front descendant du signal de synchronisation 20.

Sans détection d'un signal de synchronisation 20, le cristal liquide 18 n'est pas alimenté (0 volt).

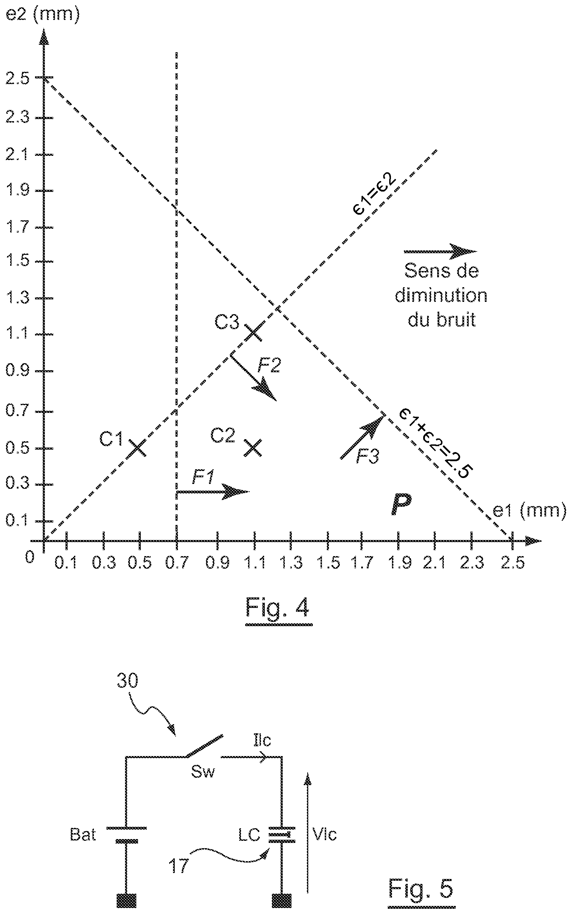

Cette commutation du cristal liquide 17 est plus amplement décrite par la suite en relation avec les figures 5, 6a à 6d, 7 et 8a à 8d.

Tel que décrit précédemment, sous une tension de commande V, une force électrostatique est créée générant une force oscillante, à une fréquence située dans la gamme audio, qui est ensuite transmise aux substrats de verre sous la forme d'une vibration acoustique.

En effet, une cellule à cristal liquide peut être assimilée en première analyse à un condensateur de capacité C. Lors de l'application d'un champ électrique E, une force électrostatique F est créée. De manière connue, cette force s'exprime sous la forme suivante :

$$F = d(W)/ d(e) = (1/2)d (CV^2)/ d(e),$$

où W est le travail de la force, e l'épaisseur entre les plaques, C la capacité et V la tension; d(W)/d(e) exprime la dérivée de W par rapport à e.

En supposant que la tension de commande V appliquée est constante, la force s'exprime de la façon suivante :

$$F = (V^2 / 2)d(C) /d(e) = - V^2 \, \varepsilon_o \, \varepsilon_r \, S /2e^2$$

Dans cette formule, V est la tension de commande appliquée aux bornes de la cellule, S la surface des plaques du condensateur et e l'épaisseur entre ses plaques (c'est-à-dire l'épaisseur de cristal liquide entre les substrats pour une cellule optique à base de cristaux liquides).

Les valeurs de $\varepsilon_o$ et $\varepsilon_r$ sont respectivement la permittivité diélectrique du vide et la permittivité relative du matériau. Si la force électrostatique F est périodique, de période double de celle de la tension de commande V appliquée (les tensions +V et -V du créneau sont équivalentes), le verre vibre et se relâche lors du passage par la valeur 0 de la force F.

Il est à noter que l'amplitude des vibrations est plus importante en présence du cristal liquide dans la cellule. En effet, la tension modifiant la valeur de $\varepsilon_r$ l'amplitude de la vibration va dépendre de la réponse du cristal liquide au champ appliqué E. Ce phénomène peut être amplifié par la réorientation du cristal liquide.

Egalement, l'épaisseur du verre et sa rigidité sont deux autres paramètres à considérer.

En résumé, l'amplitude du bruit perçu par l'utilisateur et engendré par la vibration du verre dépend principalement de la tension de commande appliquée V aux substrats et de l'épaisseur e entre les verres (autrement dit le champ électrique E), ces paramètres agissant de manière quadratique.

Le Tableau 1 introduit ci-après renseigne de valeurs de bruit en excès causé par les vibrations des premier et second substrats (14, 15) de la figure 2.

Tableau 1 : tableau de valeurs de bruit mesurés en dBa pour différentes configurations

| Configuration | Bruit en excès exprimé en dBa | |
|---|---|---|
| | Sans correction électronique | Avec correction électronique |
| Cellule vide (C0) | 0,3 | - |
| 0,5mm x 0,5mm (C1) | 17,6 | 12,5 |
| 0,5mm x 1,1mm (C2) | 15,6 | 9,4 |
| 1,1mm x 1,1mm (C3) | 15,4 | 7,8 |

Ces bruits, exprimés en dBa, sont mesurés en chambre sourde pour différentes configurations de la cellule 17 formée des premier et second substrats (14, 15) en verre d'épaisseurs respectives e1 et e2 et pour un même cristal liquide 18, à savoir :

- une configuration initiale C0 sans cristal liquide 18 à l'intérieur de l'espace 16 de la cellule 17 ;
- une première configuration C1, dite symétrique, avec un cristal liquide 18 dans l'espace 16 de la cellule 17 et avec des épaisseurs e1 et e2 identiques et égales à 0,5mm ;
- une seconde configuration C2, dite dissymétrique, avec un cristal liquide 18 dans l'espace 16 de la cellule 17, et avec une épaisseur e1 égale à 1,1 mm et une épaisseur e2 égale à 0,5 mm ;
- une troisième configuration C3, symétrique, avec un cristal liquide 18 dans l'espace 16 de la cellule 17, et avec des épaisseurs e1 et e2 identiques et égales à 1,1mm.

Ce tableau 1 donne également pour chaque configuration des valeurs du bruit avec et sans correction électronique. Cette correction électronique est introduite plus amplement dans la suite de la description et n'est pas discutée pour le moment.

La cellule 17 possède une épaisseur totale e correspondant approximativement à la somme de l'épaisseur e1 du premier substrat 14 et de l'épaisseur e2 du second substrat. Selon cette approximation, l'épaisseur e3 de la couche de matériau à cristaux liquides contenue dans l'espace libre 16 formé entre les premier et second substrats (14, 15) est considérée comme négligeable par rapport aux épaisseurs e1 et e2 des premier et second substrats, de sorte que $e \cong e_1 + e_2$.

Selon la configuration initiale C0 du tableau 1, le bruit en excès mesuré (pour une cellule 17) est de 0,3dBa (sans correction électronique). Cette mesure est tout à fait en adéquation avec la constatation selon laquelle le bruit d'une cellule 17 à base de cristal liquide 18 est dû en grande partie à la présence de cristal liquide ($\varepsilon_r$ élevé) et aux vibrations induites par la couche de matériau à cristaux liquides.

Nous allons maintenant considérer les première et troisième configurations C1 et C3 respectivement. Ces configurations sont classiquement utilisées pour la réalisation de cellule 17 à cristal liquide, chacune présentant des avantages et inconvénients plus amplement décrits ci-dessous.

Selon la troisième configuration C3 du tableau 1, de manière conventionnelle, il est classique d'utiliser un premier et un second substrat en verre dont l'épaisseur standard est d'environ 1,10 mm. Cette configuration est symétrique. L'épaisseur totale e de la cellule 17 est alors d'environ 2,20 mm et le bruit en excès mesuré (pour une cellule 17) est de 15,4 dBa (sans correction électronique).

Selon la première configuration C1, symétrique également, chaque substrat possède une épaisseur égale à 0,5 mm, soit environ une épaisseur divisée par deux pour chaque substrat en comparaison à la troisième configuration C3. Le bruit en excès mesuré (pour une cellule 17) est dans ce cas de 17,6 dBa (sans correction électronique).

Ainsi, la mesure du bruit associée à la première configuration C1 en comparaison avec la mesure du bruit associée à la troisième configuration C3, illustre clairement un constat selon lequel l'absorption des vibrations induites par la force électrostatique F en présence de matériau à cristaux liquides est d'autant plus efficace que le substrat en verre est épais.

La troisième configuration C3 permet donc d'atténuer les vibrations.

Selon un mode de réalisation de l'invention, la limitation de l'épaisseur totale e de la cellule 17 limitée à une valeur de 2,50 mm permet avantageusement de limiter son poids et son encombrement, tout en assurant un bon degré de robustesse. Au-delà de cette valeur, le poids de la cellule 17 et a fortiori de la lunette de visualisation 10 devient un critère prohibitif vis-à-vis de l'application visée.

Par exemple, pour une masse volumique du verre de 2,5 kg/l, un obturateur usuel de forme trapézoïdale et de dimensions ad hoc (par exemple pour l'oeil gauche 23' et si l'on considère une cellule par oeil), et une épaisseur totale e ≅ e1+e2 =2,5 mm, on obtient une masse de 17 grammes d'une cellule 17 formée d'un premier et d'un second substrat en verre (par exemple en BK7), pour un obturateur. On notera que, pour une paire de lunettes comprenant deux obturateurs pour l'oeil droit 23 et l'oeil gauche 23', cette valeur doit être multipliée par deux, soit 34 grammes pour les seuls obturateurs.

Au-delà de cette valeur, la masse de la cellule 17 et a fortiori de la lunette de visualisation 10 devient un critère prohibitif vis-à-vis de l'application visée.

En conclusion, bien que la cellule de la première configuration C1 présente une masse moindre en comparaison à celle de la troisième configuration C3, la première configuration C1 ne permet pas d'absorber autant les vibrations induites par la force électrostatique en comparaison à la troisième configuration C3.

Nous allons maintenant décrire la seconde configuration C2 selon un mode de réalisation particulier de l'invention.

Dans cette seconde configuration C2, le premier substrat 14 est le substrat le plus épais avec une épaisseur e1 égale à 1,1 mm et le second substrat 15 est le substrat le moins épais avec une épaisseur e2 égale à 0,5 mm. Il s'agit donc d'une configuration dissymétrique. Dans cette seconde configuration C2, le bruit en excès mesuré (pour une cellule 17) est de 15,6 dBa (sans correction électronique).

Ainsi, si l'on compare la mesure de bruit effectuée dans la troisième configuration C3, le fait d'utiliser deux substrats d'épaisseurs différentes (configuration asymétrique) permet avantageusement l'absorption d'une partie des vibrations induites par le matériau à cristal liquide tout en bénéficiant d'une structure optimisée en termes de masse, d'épaisseur et de robustesse. Grâce à l'utilisation d'un substrat en verre d'épaisseur e2 moindre, la masse de la cellule 17 est réduite tout en permettant une réduction des vibrations. En effet, l'absorption des ondes acoustiques ou vibrations est d'autant plus efficace qu'un substrat est épais. De par son épaisseur, le premier substrat le plus épais permet de limiter la flexion vibratoire des premier et second substrats et ainsi de réduire le niveau de bruit acoustique généré par le dispositif d'obturation optique lors de son fonctionnement.

Dans un mode de réalisation préférentiel, le substrat le plus mince est disposé vers l'extérieur de la lunette, tandis que le substrat le plus épais est disposé du côté de l'oeil, soit au plus près de l'appareil auditif de l'utilisateur.

Par exemple, pour une masse volumique du verre de 2,5 kg/l, un obturateur usuel de forme trapézoïdale (par exemple pour l'oeil gauche et si l'on considère une cellule par oeil) et une épaisseur totale e ≅ e1+e2 = 1,6 mm (configuration C2), on obtient une masse de 11 grammes d'une cellule 17 formée d'un premier substrat en verre (type BK7) et d'un second substrat en verre de type « mince ». On notera que, pour une paire de lunettes comprenant deux obturateurs (oeil droit et oeil gauche), cette valeur doit être multipliée par deux. Une telle configuration peut par exemple être obtenue avec un premier substrat 14 en verre d'épaisseur e1 égale à 1,1 mm et un second substrat 15 en verre de type « mince » d'épaisseur e2 égale à 0,5 mm.

Ainsi, selon un mode de réalisation particulier de l'invention, les premier et second substrats (14, 15) de la cellule 17 ont des épaisseurs respectives e1 et e2 différentes et telles que :

- l'épaisseur totale e cumulée desdits premier et second substrats est inférieure ou égale à 2,50 mm ; et
- le substrat le plus épais parmi lesdits premier et second substrats est en verre et possède une épaisseur supérieure ou égale à 0,70 mm et
- le substrat le moins épais est en verre et possède une épaisseur inférieure ou égale à 1 mm.

En effet, l'utilisation de substrats en verre d'une épaisseur supérieure ou égale à 0,70 mm permet de rigidifier suffisamment la cellule, et par conséquent de limiter la flexion vibratoire des premier et second substrats. Ceci a pour effet avantageux de réduire le niveau de bruit acoustique au niveau de la cellule 17 tout en limitant le poids de la cellule.

Selon un autre mode de réalisation de l'invention, le substrat le moins épais est en matière plastique et possède une épaisseur inférieure ou égale à 0,5 mm.

L'utilisation d'une matière plastique pour constituer le deuxième substrat permet de diminuer le poids et l'épaisseur du dispositif. En effet, les substrats flexibles en matière plastique ont des épaisseurs très faibles et une densité moindre en comparaison de celle du verre.

Cette alternative consiste donc à combiner un substrat de verre (qui assure la rigidité du composant) à un substrat plastique ayant des propriétés optiques adaptées à l'application. La substitution d'un substrat de verre par du plastique plus mince permet théoriquement de réduire la source de bruit par utilisation d'un substrat de verre plus épais, dans le cas où l'épaisseur e de la cellule 17 est imposée. Non seulement la couche plastique est moins bruyante (plus faible transmission de l'énergie acoustique), mais sa minceur permet d'épaissir la couche de verre, ce qui a pour effet de la rigidifier (et rigidifier l'ensemble) et par conséquent de limiter la flexion vibratoire de la cellule 17.

Cependant, ce mode de réalisation nécessite un certain compromis entre la recherche d'une masse la plus faible possible pour la cellule optique 17 et la nécessité d'obtenir la meilleure qualité optique possible du fait notamment que le film plastique possède des qualités optiques moindres en comparaison à celles du verre.

La **figure 4** illustre schématiquement le domaine de choix des valeurs (en mm) des épaisseurs $e_1$ et $e_2$ des premier et second substrats (14, 15), dans le cas où le premier substrat 14 d'épaisseur $e_1$ est considéré comme le substrat le plus épais. Dans cet exemple, le domaine de valeurs considérées correspond à la surface d'un polygone **P** représenté en grisé et défini par l'intersection des droites d'équations $e_1 + e_2 \leq 2,5$ mm **et** $e_1 \geq 0,70$ mm **et** $e_2 < e_1$.

Dans cet exemple, le substrat le plus épais parmi les deux substrats est le premier substrat ce qui correspond à la condition $e_2 < e_1$. Toutefois, l'invention s'applique également au cas où le deuxième substrat est le plus épais ($e_2 > e_1$). Dans ce cas, le domaine de valeurs considérées pour les épaisseurs $e_1$ et $e_2$ est un polygone (non représenté) défini par l'intersection des droites d'équations $e_1 + e_2 \leq 2,5$ mm **et** $e_2 \geq 0,70$ mm **et** $e_1 < e_2$. Ce polygone correspond au symétrique du polygone P de la figure 4 obtenu par symétrie axiale par rapport à la droite d'équation $e_2 = e_1$.

Sur la figure 4, le sens de réduction du bruit acoustique est représenté par les trois flèches F1, F2, F3 plus amplement décrites par la suite.

Ainsi, pour des valeurs des épaisseurs e1 et e2 appartenant aux valeurs comprises à l'intérieur du polygone P, la **réduction du bruit** acoustique est d'autant plus importante que :

- l'épaisseur e1 du substrat le plus épais augmente (flèche F1) ; et
- l'on s'écarte de la droite d'équation $e_1 = e_2$, c'est-à-dire selon l'accroissement de la différence des épaisseurs (flèche F2) ; et
- l'on se rapproche de la droite d'équation $e_1 + e_2 = 2,5$ mm (flèche F3).

Comme indiqué dans le tableau 1, il a été observé une réduction de bruit de plus de 2dBa en passant de la première configuration C1 à la seconde configuration C2 (sans correction électronique qui est plus amplement décrite par la suite).

La **figure 5** illustre schématiquement un circuit électronique classique de commutation 30 de la cellule 17 à base de cristal liquide 18. Ce circuit comprend un module d'alimentation « Bat » délivrant une tension continue. Pour réaliser la commutation du cristal liquide, cette tension continue est ensuite transformée en une tension de commande 22 alternativement positive et négative (+V, -V) aux bornes de la cellule 17. Le cadencement est réalisé dans ce cas, non pas par un signal de synchronisation 20 externe en provenance du projecteur tel que décrit sur la figure 3, mais en fonction de temps d'ouverture et de fermeture d'un organe de commutation Sw (par exemple un transistor) placé en série entre le module d'alimentation et la cellule 17. La tension fournie est alors une tension en forme de créneau, alternativement positive (+V) et négative (-V).

Par exemple, le cristal liquide 18 est alimenté sous une tension de commande 22 de - V volts à chaque fermeture de l'organe de commutation Sw et sous une tension de commande de + V volts à chaque ouverture de l'organe de commutation Sw.

Dans le cas de cristaux liquides du type ferroélectrique utilisés dans la présente invention et le plus largement répandus pour des applications d'affichage à cristaux liquides rapides, les valeurs des tensions de commutation sont importantes, en général de l'ordre de $10V/\mu m$ et les formes d'ondes doivent être alternatives, avec des fronts de montée et de descente les plus nets possible, de manière à obtenir des temps de commutation rapides. Par exemple, des tensions de seuil typiques de $10V/\mu m$ sont caractéristiques des matériaux smectiques tels que le Felix SCE19 de chez Merck. Ces valeurs sont sensiblement supérieures en présence de matrice de polymère.

Cependant, la charge d'une cellule 17 à cristal liquide 18 par une tension de commande 22 carrée en créneau produit un courant percussionnel important qui n'est limité que par la résistance de sortie de la source (typiquement 50W, soit 0,3A pour une tension de 15V). L'onde sonore produite constitue une source de bruit acoustique.

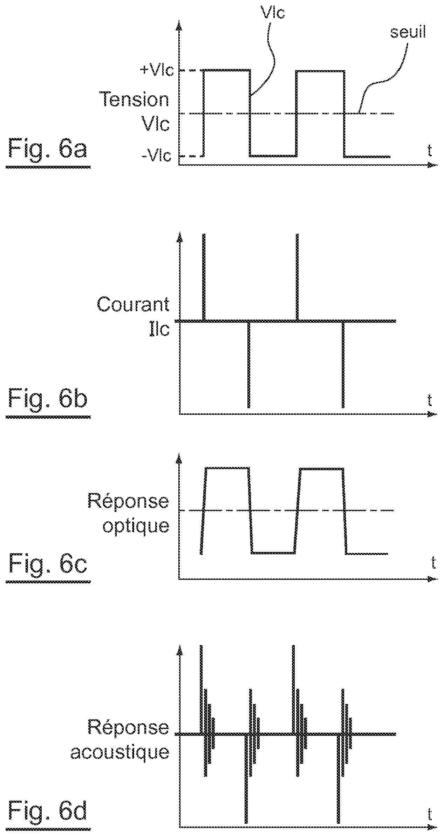

Les figures **6a à 6d** illustrent respectivement l'évolution de la tension Vlc (figure 6a) et du courant Ilc (figure 6b) qui apparaissent aux bornes de la cellule 17 en réponse à la tension de commande 22 délivrée par le circuit électronique de commutation 30 de la figure 5. Est également représenté sur la figure 6c la réponse optique et sur la figure 6d la réponse acoustique de la cellule 17.

Tel qu'illustré sur la figure 6a, la tension Vlc qui apparaît aux bornes de la cellule 17 est en forme de créneau, cadencée sur les fronts montant et descendant de la tension de commande 22. L'amplitude de la tension Vlc est égale à +Vlc - (-Vlc)= 2*Vlc.

A chaque commutation du cristal liquide 18, un courant percussionnel Ilc apparaît (figure 6b). La réponse optique du cristal liquide 17 sous cette tension de commande est quasi immédiate avec des temps de montée et de descente courts (figure 6c).

La figure 6d quant à elle illustre la génération d'un bruit acoustique à chaque commutation du cristal liquide 18.

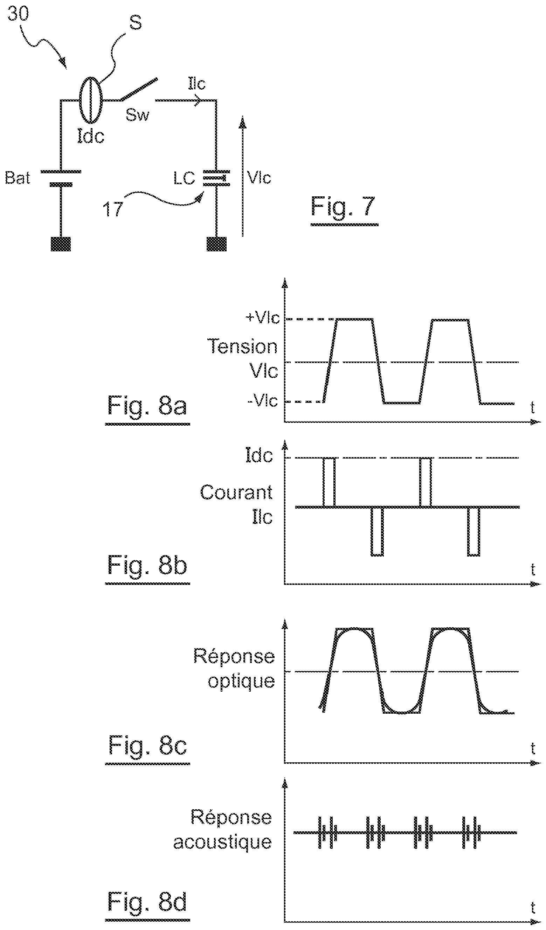

Selon un mode de réalisation particulier de l'invention illustré sur **la figure 7**, il est proposé d'adapter le circuit électronique classique de commutation 30 de la figure 5 pour atténuer le bruit occasionné par la vibration d'un substrat en verre. Cette atténuation est notamment réalisée par un contrôle des formes d'impulsion de la tension de commande 22 des cristaux liquides 18 de la cellule 17. L'optimisation de la forme d'onde doit alors prendre en compte non seulement la réponse du cristal liquide 18, mais aussi la façon dont vibre le verre sous l'effet d'une force électrostatique variable.

Ainsi, en plus des éléments constitutifs du circuit électronique de commutation 30 de la figure 5 et pour contrôler les formes d'impulsion de la tension de commande 22, la présente invention propose un circuit électronique de commutation 30 permettant de limiter le bruit par une adaptation des fronts de montée dans le cas d'un cristal liquide ferroélectrique. Bien entendu, cette technique peut-être appliquée également à d'autres cristaux liquides.

Tel que décrit précédemment, la charge d'une cellule 17 à cristal liquide 18 par une tension de commande 22 carrée en créneau produit un courant percussionnel important. L'onde sonore produite constitue une source de bruit acoustique.

Pour réduire cette source de bruit, dans ce mode de réalisation particulier, l'invention propose de placer, par exemple, une source de courant S délivrant un courant continu Idc, cette source S étant placée entre l'organe de commutation Sw et le module d'alimentation « Bat ». Cette modification du circuit de la commutation 30 de la figure 5, simple et efficace, se base sur le fait que si le courant Idc est limité à une valeur déterminée pendant la commutation (charge et la décharge de la cellule) par une source de courant agissant en limiteur, la tension développée sur la cellule croit linéairement (en première approximation) et la réponse optique de la cellule est une sigmoïde qui présente une pente similaire. L'énergie absorbée par la cellule est alors étalée dans le temps et le bruit percussionnel est fortement diminué tel qu'illustré en relation avec les figures 8a à 8d.

Les **figures 8a à 8d** illustrent respectivement l'évolution de la tension Vlc (figure 8a) et du courant Ilc (figure 8b) qui apparaissent aux bornes de la cellule optique 17 en réponse à la tension de commande 22 délivrée par le circuit électronique de commutation 30 de la figure 7. Est également représentée sur la figure 8c la réponse optique de la cellule et sur la figure 8d la réponse acoustique de la cellule 17.

Tel qu'illustré sur la figure 8a, la tension Vlc qui apparaît aux bornes de la cellule 17 est en forme de créneau étalé dans le temps, cadencée sur les fronts montant et descendant de la tension de commande 22. L'amplitude de la tension Vlc est égale à +Vlc - (-Vlc) = 2*Vlc.

A chaque commutation du cristal liquide 18, un courant Ilc apparaît (figure 8b). Ce courant est en outre limité par la valeur du courant Idc de la source S de courant agissant en limiteur.

La figure 8c illustre la réponse optique du cristal liquide 17 qui, dans ce cas, est moins rapide. En effet, les temps de commutation sont moins rapides en comparaison à la configuration de la figure 6c. Il s'agit donc là d'un compromis à faire entre la limitation du bruit dû au courant percussionel et la vitesse de commutation des cristaux liquides.

La figure 8d illustre la génération d'un bruit acoustique à chaque commutation du cristal liquide 18. En comparaison à la figure 6d, il est constaté dans ce cas une forte diminution du bruit acoustique dû à la commutation du cristal liquide 18 de la cellule 17.

Par exemple, si la valeur de la tension appliquée Vlc varie entre +15 volts et -15 Volts et si l'intensité Idc délivrée par la source de courant selon l'invention est fixée à 5 mA (figure 8b), les temps de montée observés pour la tension Vlc (figure 8a) et pour la réponse optique (figure 8c) sont égaux à 500 microsecondes_ et _300 microsecondes respectivement.

Ces temps de montée correspondent aux temps de montée nécessaire pour passer de 10% à 90% de la valeur maximale (+15V).

Le tableau 1 illustre l'ensemble de ces résultats. A configuration équivalente, la réduction du bruit est remarquable en présence de cette source S de courant agissant comme limiteur de courant. Par exemple, pour la seconde configuration C2, le bruit en excès est abaissé de 6,2 dBa en passant d'une seconde configuration sans correction électronique à une seconde configuration avec correction électronique.

Il en est de même pour les première et troisième configurations avec respectivement une réduction du bruit de 5,1 dBa et 7,6 dBa.

Pour ajuster les temps de commutation du cristal liquide 18 et ainsi réduire la valeur de l'amplitude du courant percussionel, selon un autre mode de réalisation de l'invention, il est proposé d'utiliser comme matériau cristal liquide 18 un cristal liquide ferroélectrique « FLC » stabilisé par polymère, formant ainsi un gel cristal liquide stabilisé par polymère et plus connu sous le nom de PSFLC.

Selon un autre mode de réalisation de l'invention, il est proposé d'utiliser comme matériau cristal liquide 18, un cristal liquide smectique anti-ferroélectrique « AFLC » et un polymère, formant ainsi un gel cristal liquide stabilisé par ledit polymère et plus connu sous le nom de PSAFLC.

L'emploi d'une chaîne polymère, pour garantir une bonne stabilité de la structure et la non formation de défauts, résulte en la modification de la réponse électro-optique de ces structures composites, avec une valeur de pente de commutation dépendant de la concentration en polymère pour ainsi obtenir des temps de montée plus progressifs.

Il est à noter que l'augmentation de la concentration en polymère s'accompagne d'une réduction du temps de commutation du fait de la résistance de la chaîne polymère aux mouvements des molécules. Ce mécanisme a pour effet de réduire également le bruit acoustique en limitant l'impact de la percussion électrique sur le mouvement de rotation du directeur des molécules.

De manière préférentielle, la concentration en masse volumique de polymère est comprise entre de 10 et 15%. Pour rappel, les PSFLC ou PSAFLC sont, comme les PDLC, constitués par l'association de cristal liquide et de polymère mais diffèrent de ceux-ci par le fait que le polymère n'y est pas encapsulé sous forme de gouttelettes. Dans les PSFLC (ou PSAFLC), cristal liquide et polymère forment un gel composite dans lequel le cristal liquide n'est pas encapsulée.

Les structures PSFLC (ou PSAFLC) présentent des caractéristiques différentes selon le taux de polymère du mélange. Pour de fortes concentrations (supérieures à 10% en masse de polymère) c'est la structure du réseau de polymère qui agit de façon prépondérante sur les caractéristiques du cristal liquide.

Selon un autre mode de réalisation de l'invention, la cellule 17 comprend en outre au moins une couche d'un matériau viscoélastique absorbant l'énergie acoustique et/ou mécanique. Cette couche est par exemple réalisée dans un matériau du type polycarbonate, acrylique ou PMMA (polyméthacrylate de méthyle) et peut notamment prendre la forme d'une feuille absorbant l'énergie acoustique ou certaines des fréquences de celle-ci. Le matériau viscoélastique peut être également un liquide visqueux confiné par une feuille plastique ou une plaque en verre. Ce matériau doit être transparent, non toxique, non volatile, de viscosité élevée (de préférence supérieure à 4.5 Pa.s). A titre d'exemple, celui-ci est constitué par un mélange d'une part de PEG-4000 et de trois parts de PEG400.

Pour une cellule à base de cristaux liquides utilisée pour la fabrication d'un écran 11 pour lunette de visualisation 10 tel que décrit précédemment, cette couche doit posséder un indice et une isotropie adaptés à l'application, c'est-à-dire que la couche de matériau absorbant doit être transparente dans le visible et posséder un indice proche des autres couches de matériau, à savoir le matériau des premier et second substrats de la cellule 17, afin de limiter les réflexions parasites et l'anisotropie résiduelle.

Cette utilisation d'une couche d'un matériau absorbant permet ainsi d'améliorer la réduction des vibrations induites par la commutation des cristaux liquides sous une tension de commutation.

Bien entendu, pour réduire le bruit acoustique généré par la vibration des premier et second substrats lors de la commutation du cristal liquide 18, il est possible de mettre en oeuvre uniquement une seule des deux solutions combinées décrites précédemment, à savoir un dispositif d'obturation optique comprenant :

- soit une mise en oeuvre de la cellule 17 selon la configuration dissymétrique des premier et second substrats, telle que décrite en relation avec la seconde configuration C2 ;
- soit une mise en oeuvre d'une cellule classique, c'est-à-dire de configuration symétrique, dont le circuit de commutation des cristaux liquides comprend une correction électronique utilisant une source de courant additionnelle agissant en tant que limiteur.

Il est cependant important de noter que l'effet combiné d'une configuration dissymétrique et d'une correction électronique utilisant une source de courant additionnelle agissant en tant que limiteur, va au-delà de leur effet individuel juxtaposé. Ceci justifie leur combinaison qui présente un véritable caractère inventif.

La présente invention ne se limite bien sûr pas à la forme de réalisation préférentielle décrite ci-dessus à titre d'exemple non limitatif. Elle concerne, par exemple, tout dispositif d'affichage optique comprenant un dispositif d'obturation optique selon la présente invention. Elle concerne également toutes les variantes de réalisation à la portée de l'homme du métier dans le cadre des revendications ci-après.

**Revendications**

1. Dispositif d'obturation optique comprenant :

   - une cellule optique (17) formée d'un premier substrat (14) transparent et d'un second substrat (15) transparent disposés en regard l'un de l'autre pour former un espace libre (16) ;
   - un matériau à cristal liquide (18) placé dans ledit espace libre ;
   - un circuit électronique de commutation (30) configuré pour commuter ladite cellule entre un état passant et un état bloquant,

   ledit circuit électronique de commutation comprenant:

   *un module d'alimentation (Bat) fournissant une tension de commande de commutation (22) de ladite cellule ;
   *un organe de commutation (SW) permettant de faire commuter ladite cellule entre l'état passant et l'état bloquant ;
   * une source de courant continu (S) permettant de limiter le courant issu du module d'alimentation (Bat) à une valeur déterminée pendant la commutation de ladite cellule,

   **caractérisé en ce que**
   le module d'alimentation, la source de courant continu, l'organe de commutation et la cellule optique étant montés en série dans cet ordre.

2. Dispositif selon la revendication 1, **caractérisé en ce que** les premier et second substrats (14, 15) ont des épaisseurs respectives (e1) et (e2), différentes et telles que :

- une épaisseur totale (e) cumulée desdits premier et second substrats est inférieure ou égale à 2,50 mm ; et
- le substrat le plus épais parmi lesdits premier et second substrats est en verre et possède une épaisseur supérieure ou égale à 0,70 mm.

3. Dispositif selon la revendication 2, **caractérisé en ce que** le substrat le moins épais est en verre et possède une épaisseur inférieure ou égale à 1 mm.

4. Dispositif selon la revendication 2, **caractérisé en ce que** le substrat le moins épais est en matière plastique et possède une épaisseur inférieure ou égale à 0,5 mm.

5. Dispositif selon l'une quelconque des revendications 1 à 4, **caractérisé en ce que** le matériau cristal liquide (18) comprend une association d'au moins un cristal liquide et d'un polymère, formant ainsi un gel cristal liquide stabilisé par ledit polymère.

6. Dispositif selon l'une quelconque des revendications 1 à 4, **caractérisé en ce que** le matériau cristal liquide (18) comprend une association d'au moins un cristal liquide smectique ferroélectrique FLC ou anti-ferroélectrique AFLC et d'un polymère, formant ainsi un gel cristal liquide stabilisé par ledit polymère et plus connu sous le nom respectivement de PSFLC ou PSAFLC.

7. Dispositif selon l'une quelconque des revendications 5 à 6, **caractérisé en ce que** ladite association d'au moins un cristal liquide et d'un polymère est telle que la concentration en masse volumique de polymère est comprise entre 10 et 15 %.

8. Dispositif selon l'une quelconque des revendications 1 à 7, **caractérisé en ce qu'**il comprend en outre au moins une couche transparente de matière viscoélastique.

9. Lunette de visualisation comprenant un dispositif d'obturation optique selon l'une quelconque des revendications 1 à 8.

10. Dispositif d'affichage optique comprenant un dispositif d'obturation optique selon l'une quelconque des revendications 1 à 8.

**Patentansprüche**

1. Optische Blendenanordnung, die folgendes umfasst:

- eine optische Zelle (17), gebildet durch ein erstes lichtdurchlässiges Substrat (14) und ein zweites lichtdurchlässiges Substrat (15), wobei diese Substrate derart einander gegenüberliegend angeordnet sind, dass sie einen freien Raum (16) bilden;
- einen Flüssigkristallstoff (18), der in diesem freien Raum angeordnet ist;
- eine elektronische Schaltung (30), die so konfiguriert ist, dass sie die besagte Zelle zwischen einem Durchlasszustand und einem Sperrzustand schaltet,

**dadurch gekennzeichnet, dass** die besagte elektronische Schaltung folgendes umfasst:

- ein Versorgungsmodul (Bat), welches eine Steuerspannung (22) für die besagte Zelle liefert,
- ein Schaltorgan (SW), welches das Schalten der besagten Zelle zwischen dem Durchlasszustand und dem Sperrzustand ermöglicht;
- eine Gleichstromquelle (S), die das Begrenzen des aus dem Versorgungsmodul (Bat) kommenden Stroms auf einen bestimmten Wert während des Schaltens der besagten Zelle zulässt,

und dadurch, dass das Versorgungsmodul, die Gleichstromquelle, das Schaltorgan und die optische Zelle in dieser Reihenfolge in Serie angeordnet sind.

2.  Anordnung nach Anspruch 1, **dadurch gekennzeichnet,
    dass** das erste und zweite Substrat (14, 15) jeweils verschiedene Stärken (e1) und (e2) aufweisen, so dass:

    - die gesamte kumulierte Stärke (e) der besagten ersten und zweiten Substrate kleiner oder gleich 2,50 mm ist, und
    - das stärkere von den besagten ersten und zweiten Substraten aus Glas ist und eine Stärke aufweist, die größer oder gleich 0,70 mm ist.

3.  Anordnung nach Anspruch 2, **dadurch gekennzeichnet, dass** das dünnere Substrat aus Glas ist und eine Stärke aufweist, die 1 mm oder weniger beträgt.

4.  Anordnung nach Anspruch 2, **dadurch gekennzeichnet, dass** das dünnere Substrat aus Kunststoff ist und eine Stärke aufweist, die kleiner oder gleich 0,5 mm oder ist.

5.  Anordnung nach einem der Ansprüche 1 bis 4, **dadurch gekennzeichnet, dass** der Flüssigkristallstoff (18) eine Zusammenfügung von mindestens einem Flüssigkristall und einem Polymer umfasst, so dass ein vom besagten Polymer stabilisiertes Flüssigkristallgel gebildet wird.

6.  Anordnung nach einem der Ansprüche 1 bis 4, **dadurch gekennzeichnet, dass** der Flüssigkristallstoff (18) eine Zusammenfügung von mindestens einem ferroelektrischen smektischen Flüssigkristall FLC oder einem antiferroelektrischen smektischen Flüssigkristall AFLC und einem Polymer umfasst, so dass ein vom besagten Polymer stabilisiertes Flüssigkristallgel gebildet wird, dass eher unter der Bezeichnung PSFLC oder PSAFLC bekannt ist.

7.  Anordnung nach einem der Ansprüche 5 bis 6, **dadurch gekennzeichnet, dass** die besagte Zusammenfügung von mindestens einem Flüssigkristall und einem Polymer derart ist, dass die als volumenbezogene Masse ausgedrückte Polymerkonzentration zwischen 10 und 15 % liegt.

8.  Anordnung nach einem der Ansprüche 1 bis 7, **dadurch gekennzeichnet, dass** sie außerdem mindestens eine lichtdurchlässige Schicht aus einem viskoelastischen Stoff umfasst.

9.  Ansichtsbrille, die eine optische Blendenanordnung nach einem der Ansprüche 1 bis 8 aufweist.

10. Optische Anzeigeanordnung, die eine optische Blendenanordnung nach einem der Ansprüche 1 bis 8 aufweist.

**Claims**

1.  Optical shuttering device, comprising

    - an optical cell (17) formed by a first transparent substrate (14) and a second transparent substrate (15), which are arranged facing one another so as to form a free space (16);
    - a liquid-crystal material (18) placed in the said free space;
    - an electronic switching circuit (30) configured in order to switch the said cell between a transmissive state and a blocking state,

    the said electronic switching circuit comprising:

    * a supply module (Bat) providing a switching control voltage (22) of the said cell;
    * a switching component (SW) making it possible to make the said cell switch between the transmissive state and the blocking state;
    * a direct-current source (S) making it possible to limit the current delivered by the supply module (Bat) to a determined value during the switching of the said cell,

    **characterised in that**
    the supply module, the direct-current source, the switching component and the optical cell are mounted in series **in that** order.

2. Device according to Claim 1, **characterised in that** the first and second substrates (14, 15) have different respective thicknesses (e1) and (e2) such that:

- a cumulative total thickness (e) of the said first and second substrates is less than or equal to 2.50 mm; and
- the thicker substrate of the first and second substrates is made of glass and has a thickness greater than or equal to 0.70 mm.

3. Device according to Claim 2, **characterised in that** the less thick substrate is made of glass and has a thickness less than or equal to 1 mm.

4. Device according to Claim 2, **characterised in that** the less thick substrate is made of plastic material and has a thickness less than or equal to 0.5 mm.

5. Device according to any one of Claims 1 to 4, **characterised in that** the liquid-crystal material (18) comprises a combination of at least one liquid crystal and a polymer, thus forming a liquid-crystal gel stabilised by the said polymer.

6. Device according to any one of Claims 1 to 4, **characterised in that** the liquid-crystal material (18) comprises a combination of at least one ferroelectric FLC or antiferroelectric AFLC smectic liquid crystal and a polymer, thus forming a liquid-crystal gel stabilised by the said polymer and more commonly known by the name PSFLC or PSAFLC, respectively.

7. Device according to either of Claims 5 and 6, **characterised in that** the said combination of at least one liquid crystal and a polymer is such that the mass density of polymer lies between 10 and 15%.

8. Device according to any one of Claims 1 to 7, **characterised in that** it furthermore comprises at least one transparent layer of viscoelastic material.

9. Viewing goggles comprising an optical shuttering device according to any one of Claims 1 to 8.

10. Optical display device comprising an optical shuttering device according to any one of Claims 1 to 8.

Fig. 1a

Fig. 1b

Fig. 2

Fig. 3

Fig. 4

Fig. 5

Fig. 6a

Vlc

seuil

+Vlc

Tension Vlc

-Vlc

t

Fig. 6b

Courant Ilc

t

Fig. 6c

Réponse optique

t

Fig. 6d

Réponse acoustique

t

30

S

Ilc

Sw

Idc

Bat

LC    Vlc

17

Fig. 7

+Vlc

Tension
Vlc

-Vlc

t

Fig. 8a

Idc

Courant
Ilc

t

Fig. 8b

Réponse
optique

t

Fig. 8c

Réponse
acoustique

t

Fig. 8d

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6943852 B
- EP 1798710 A
- FR 0702441